# DEMANDE DE BREVET EUROPEEN

(11) **EP 4 621 155 A1**
(43) Date de publication de la demande: **24.09.2025**
(21) Numéro de dépôt: 25164179.1
(22) Date de dépôt: 17.03.2025
(51) Int. Cl.: E04C 1/40, E04B 2/02

(54) **BLOC DE CONSTRUCTION ET PROCÉDÉ DE FABRICATION ASSOCIÉ**

(30) Priorité: 19.03.2024 FR 2402712
(71) Demandeur: T.P.B., 25500 Les Combes (FR)
(72) Inventeur: BELTRAMELLI, Yoann, 25500 MONTLEBON (FR)
(74) Mandataire: Ipsilon

(57) **Abrégé**

L'invention concerne un bloc de construction (1) comportant au moins un noyau (2) et une enveloppe (3), ledit au moins noyau (2) étant disposé à l'intérieur de ladite enveloppe (3). Ce bloc est particulier en ce que ledit au moins un noyau (2) comporte des particules (4) de bois et/ou de plastique et/ou de plâtre et/ou de verre et/ou de cailloux et/ou de brique et/ou de béton et/ou de laine de verre et/ou de laine de roche et/ou de carton souillé et/ou de polystyrène et/ou de mâchefer et/ou de caoutchouc, et en ce que ladite enveloppe (3) est réalisée dans un béton comportant au moins 90% en poids de matière minérale.

L'invention concerne également un procédé de fabrication d'un bloc de construction (1) selon l'invention.

## Description

### Domaine technique

La présente invention se situe dans le domaine de la construction. Elle concerne plus particulièrement un bloc de construction, et son procédé de fabrication. L'invention permet notamment de valoriser les déchets de construction, et autres déchets, notamment les déchets difficilement valorisables par des procédés connus.

### Technique antérieure

Les blocs de construction sont aujourd'hui communément fabriqués en béton de ciment. Ce béton comporte de grandes quantités de sable et de ciment, et a une empreinte carbone particulièrement importante.

Plusieurs solutions existent aujourd'hui pour obtenir des blocs de construction à l'empreinte carbone réduite. Il a été proposé de modifier la composition du béton, en remplaçant une partie au moins de la charge minérale par des éléments biosourcés comme du bois. Ce béton nécessite encore une grande quantité de liants minéraux, et les éléments biosourcés, même à un degré moindre que les éléments minéraux, restent des ressources coûteuses pour l'environnement. Il existe donc encore un intérêt important à développer de nouveaux matériaux de construction dont l'empreinte carbone est encore réduite.

Il a été proposé de réaliser des blocs de construction dans des matériaux comportant des déchets de construction. Ces blocs présentent des limites importantes. En effet, ils font habituellement l'objet du compromis suivant. Soit les déchets qui les composent sont soigneusement triés et choisis pour obtenir des blocs présentant de bonnes propriétés mécaniques, mais dans ce cas le coût des blocs est plus important et certains déchets ne peuvent pas être utilisés, et ne sont donc pas valorisés. Soit les déchets qui les composent sont très peu triés, ce qui permet une valorisation optimale de l'ensemble des déchets, au détriment de la répétabilité des propriétés mécaniques des blocs de construction. On obtient donc des blocs de construction qui ont soit un impact limité sur l'environnement, soit présentent une garantie au niveau de leurs propriétés mécaniques insuffisante pour un grand nombre d'applications.

Les documents EP3872265 A1 et US20050029428 propose un procédé de fabrication de blocs de construction dans lequel les déchets sont compressés pour former un bloc solide, puis un revêtement de béton est réalisé autour du bloc solide. Malgré ces propositions, il existe encore un besoin de réduire encore la quantité de déchets incinérés ou enfouis.

### Exposé de l'invention

La présente invention vise à pallier ces inconvénients en proposant un bloc de construction comportant au moins un noyau et une enveloppe, ledit au moins noyau étant disposé à l'intérieur de ladite enveloppe.

Ce bloc de construction est particulier en ce que ledit au moins un noyau comporte des particules de bois et/ou de plastique et/ou de plâtre et/ou de verre et/ou de cailloux et/ou de brique et/ou de béton et/ou de laine de verre et/ou de laine de roche et/ou de carton souillé et/ou de polystyrène et/ou de mâchefer et/ou de caoutchouc, et en ce que ladite enveloppe est réalisée dans un béton comportant au moins 90% en poids de matière minérale.

Grâce à ces dispositions, il est possible de valoriser une grande part des déchets de construction, voire tous les déchets de construction, ainsi que d'autres types de déchets, et d'obtenir un bloc de construction suffisamment résistant mécaniquement pour être utilisé dans de nombreuses applications. L'invention permet donc d'obtenir ainsi des blocs de construction utilisant une quantité réduite de matière première, et permettant de réduire les déchets amenés en décharge, enfouis et/ou incinérés.

Le noyau peut comporter un liant, et la teneur en volume de particules dans le noyau peut être comprise entre 50 et 80 %, ce qui permet de conférer au bloc de construction de bonnes propriétés mécanique tout en valorisant une quantité importante de déchets.

La teneur en volume de particules du noyau dans le bloc peut être comprise entre 40 et 80 %, ce qui permet de conférer au bloc de construction de bonnes propriétés mécanique tout en valorisant une quantité importante de déchets.

Le noyau peut comporter des particules d'au moins deux éléments différents parmi le bois, le plastique, le plâtre, le verre, le caillou, la brique, le béton, la laine de verre, la laine de roche, le carton souillé, le polystyrène, le mâchefer et le caoutchouc, ce qui permet une valorisation d'une grande quantité de déchets difficilement valorisables.

Le noyau peut comporter des particules d'au moins cinq éléments différents parmi le bois, le plastique, le plâtre, le verre, le caillou, la brique, le béton, la laine de verre, la laine de roche, le carton souillé, le polystyrène, le mâchefer et le caoutchouc, ce qui permet une valorisation d'une encore plus grande quantité de déchets difficilement valorisables et notamment non recyclables.

La granulométrie des particules peut être comprise entre 0 et 100 mm, ce qui est un mode de réalisation efficace de l'invention.

Ledit bloc de construction peut comporter une première face comprenant au moins un ergot, et une deuxième face opposée à la première face comprenant au moins un évidement configuré pour recevoir un ergot d'un autre bloc de construction, afin de rendre ledit bloc de construction empilable, ce qui permet d'utiliser le bloc de construction de façon simple.

La présente invention comporte également un procédé de fabrication d'un bloc de construction selon l'invention, comportant les étapes suivantes :
- collecte de déchets constitués au moins en partie de bois et/ou de plastique et/ou de plâtre et/ou de verre et/ou de cailloux et/ou de brique et/ou de béton et/ou de laine de verre et/ou de laine de roche et/ou de carton souillé et/ou de polystyrène et/ou de mâchefer et/ou de caoutchouc sur un chantier de construction et/ou un incinérateur et/ou un point de collecte de pneus usagés et/ou un centre de tri,
- broyage des déchets afin d'obtenir lesdites particules.

Grâce à ces dispositions, il est possible de valoriser une grande part des déchets de construction, voire tous les déchets de construction, ainsi que d'autres types de déchets, et d'obtenir un bloc de construction suffisamment résistant mécaniquement pour être utilisé dans de nombreuses applications. L'invention permet donc d'obtenir ainsi des blocs de construction utilisant une quantité réduite de matière première, et permettant de réduire les déchets amenés en décharge, enfouis ou incinérés.

Ledit procédé peut comporter en outre les étapes suivantes :
- fabrication d'un bloc de construction selon l'invention, la collecte des déchets ayant lieu au moins partiellement sur un chantier de construction, et la fabrication ayant lieu sur ledit chantier de construction,
- utilisation du bloc de construction pour réaliser un mur sur ledit chantier de construction.

Ceci permet une valorisation très rapide des déchets de construction, réduisant de façon très importante l'énergie dépensée en transport de déchets et de blocs de construction.

Les déchets collectés peuvent comprendre au moins un bloc de construction selon l'invention usagé, ce qui permet de recycler successivement les mêmes déchets, permettant d'éviter un enfouissement et/ou une mise en décharge et/ou une incinération de ces déchets à la fin de la vie du bloc de construction.

La présente invention concerne encore un procédé de fabrication d'un bloc de construction selon l'invention, comportant les étapes suivantes :
- coulage de la base de l'enveloppe au fond du moule,
- mise en place d'au moins un séparateur dans le moule, le séparateur comportant des éléments latéraux définissant un volume intérieur correspondant au volume du noyau, le séparateur étant ouvert à ses extrémités inférieure et supérieure, le séparateur comportant un moyen de suspension situé au-dessus de ses éléments latéraux et étant suspendu dans le moule par ledit moyen de suspension, de façon à ce que la partie inférieure de ses éléments latéraux affleure le haut de la base de l'enveloppe,
- avant que la base de l'enveloppe ne soit sèche, coulage du noyau à l'intérieur du séparateur, le noyau étant maintenu en place par la base de l'enveloppe et les éléments latéraux du séparateur,
- avant que la base de l'enveloppe ne soit sèche, coulage des parois latérales de l'enveloppe autour des éléments latéraux du séparateur,
- retrait du séparateur du moule, afin de mettre en contact le noyau avec les parois latérales de l'enveloppe.

Le bloc de construction selon l'invention peut alors être réalisé de façon simple et efficace, et présenter de bonnes propriétés mécanique grâce à l'adhérence de toutes ses parties liées entre elles.

### Brève description des dessins

La présente invention et ses avantages apparaîtront mieux dans la description suivante de plusieurs modes de réalisation donnés à titre d'exemples non limitatifs, en référence aux dessins annexés, dans lesquels:
[Fig 1] la fig. 1 est une vue schématique en coupe d'un bloc de construction selon un mode de réalisation préférentiel de l'invention,
[Fig 2] la fig. 2 est une vue en perspective de la première étape d'un procédé de fabrication d'un bloc de construction selon un mode de réalisation préférentiel de l'invention,
[Fig 3] la fig. 3 est une vue en perspective de la deuxième étape du procédé de la fig. 2,
[Fig 4] la fig. 4 est une vue en perspective de la troisième étape du procédé de la fig. 2,
[Fig 5] la fig. 5 est une vue en perspective de la quatrième étape du procédé de la fig. 2,
[Fig 6] la fig. 6 est une vue en perspective de la cinquième étape du procédé de la fig. 2,
[Fig 7] la fig. 7 est une vue en perspective de la sixième étape du procédé de la fig. 2, [Fig 8] la fig. 8 est une vue en perspective de la septième étape du procédé de la fig. 2,
[Fig. 9] la fig. 9 est une vue en perspective de plusieurs blocs de construction fabriqués selon le procédé de la fig. 2, empilés.

### Description des modes de réalisation

En référence aux figures, le bloc de construction 1 selon l'invention comporte au moins un noyau 2, disposé dans une enveloppe 3. Le bloc de construction 1 peut comporter un noyau 2 unique, entouré d'une enveloppe 3, ou une pluralité de noyaux 2, chacun entouré de sa propre enveloppe 3. Si le bloc de construction 1 comporte une pluralité de noyaux 2, des portions d'enveloppe 3 peuvent être communs aux noyaux 2 situés les uns à côté des autres.

Le bloc de construction 1 a de préférence la forme d'un parallélépipède rectangle, mais il peut prendre d'autres formes sans sortir du cadre de la présente invention.

Le noyau 2, également, a de préférence la forme d'un parallélépipède rectangle, mais peut prendre d'autres formes sans sortir du cadre de la présente invention.

L'enveloppe 3 peut entourer entièrement le noyau 2, ou elle peut laisser le noyau 2 affleurer du bloc de construction 1 au niveau d'une de ses faces.

Le noyau 2 comporte des particules 4 constituées d'un ou plusieurs matériaux compris dans la liste suivante : le bois, le plastique, le plâtre, le verre, le caillou, la brique, le béton, la laine de verre, la laine de roche, le carton souillé, le polystyrène, le mâchefer et le caoutchouc. Par carton souillé, on entend ici un carton qui est considéré non recyclable en raison de la présence de produits sur ce carton. Par caoutchouc, on entend notamment des particules issues de pneus de voitures, camions, camionnettes, vélos, etc.

Les particules 4 du noyau 2 peuvent être issues de plusieurs éléments listés ci-dessus : de préférence au moins deux éléments différents, mais de façon avantageuse au moins trois, quatre, cinq, six, sept ou huit de ces éléments. En effet, les particules 4 sont, dans un mode de réalisation préféré de l'invention, issues de déchets d'un chantier de construction, notamment pour l'ensemble des matériaux cités à l'exception du mâchefer et du caoutchouc. Ainsi, augmenter le nombre de matériaux différents utilisés pour les particules 4 permet de valoriser une plus grande part des déchets des chantiers. C'est pourquoi dans un mode particulier de réalisation de l'invention, le noyau 2 comporte des particules 4 constituées d'au moins huit, et de préférence neuf, dix voire tous les matériaux cités à l'exception du mâchefer et du caoutchouc. En effet, les déchets de construction sont habituellement valorisés pour certains, et stockés dans des décharges pour d'autres. Les déchets habituellement valorisés sont par exemples les ferrailles, le carton non souillé, ou certains plastiques, facilement recyclables. De préférence, l'ensemble des déchets de construction qui sont habituellement stockés dans des décharges peuvent être utilisés pour produire les particules 4 du bloc de construction 1. Ceci concerne par exemple les déchets difficilement valorisables par les techniques connues, telles que les fenêtres avec châssis en pvc, ou encore le bois de classe C.

Le mâchefer est quant à lui issu habituellement d'un incinérateur, et le caoutchouc d'un point de collecte de pneus usagés. L'utilisation de l'un, de l'autre, ou de ces deux matériaux, habituellement peu valorisables, est également particulièrement pertinente dans le cadre de la présente invention, et permettent une réduction des déchets et une diminution de l'empreinte carbone des blocs de construction.

Des déchets issus d'autres sources que les chantiers de construction, les incinérateurs ou les points de collecte de pneus usagés peuvent être utilisés pour produire les particules 4 utilisées dans les blocs de construction 1. En effet, une grande diversité de déchets peut être utilisés et es déchets peuvent provenir par exemple de centres de tri, d'installations industrielles, ou de tout autre lieu pertinent.

Le noyau 4 peut également comporter d'autres types de déchets, par exemple des résidus métalliques ferreux et non ferreux, des déchets industriels banals, des ordures ménagères, des déchets de production, des boues d'épuration , des boues de déchets, etc. Si le noyau comporte des résidus comportant des matières organiques, il est alors préférable qu'il comporte un liant 5 rendant inertes ces matières, par exemple par la présence de chaux.

Lorsque les particules 4 sont issues d'un chantier de construction, la fabrication du bloc de construction 1 et son utilisation, pour ériger par exemple un mur, peuvent avoir lieu sur ce même chantier de construction.

Les particules 4 du noyau 2 ont par exemple une granulométrie inférieure à 100 mm, de préférence inférieure à 80 mm. Ces dimensions présentent un bon équilibre entre l'énergie nécessaire pour broyer les matériaux, et l'homogénéité du noyau 4. Cette granulométrie peut être obtenue suite à une ou plusieurs étapes de broyages. Dans un mode de réalisation préféré de l'invention, un premier broyage est réalisé, pour obtenir une granulométrie inférieure à une valeur comprise entre 70 et 90 mm, par exemple 80 mm, puis un deuxième broyage est réalisé pour obtenir une granulométrie inférieure à une valeur comprise entre 10 et 30 mm, par exemple 20 mm. Dans cet exemple, les particules 4 auront donc une granulométrie inférieure à 20 mm pour certains matériaux tels que le plâtre, mais pour d'autres matériaux tel que le bois, des morceaux dont une dimension peut aller jusqu'à 100 mm peuvent subsister.

Afin d'obtenir un bloc 1 selon l'invention, les particules 4 peuvent donc être obtenues de la façon suivante :
- collecte de déchets constitués au moins en partie de bois et/ou de plastique et/ou de plâtre et/ou de verre et/ou de cailloux et/ou de brique et/ou de béton et/ou de laine de verre et/ou de laine de roche et/ou de carton souillé et/ou de polystyrène et/ou de mâchefer et/ou de caoutchouc sur un chantier de construction et/ou un incinérateur et/ou un point de collecte de pneus usagés et/ou un centre de tri,
- broyage des déchets afin d'obtenir lesdites particules 4.

Les déchets collectés peuvent comporter un ou plusieurs blocs de construction 1 usagés. Ainsi les blocs de construction 1 peuvent être recyclés plusieurs fois successivement, voire à l'infini, augmentant encore leur impact en termes de réduction des déchets et de diminution de l'empreinte carbone des blocs de construction. Pour faciliter cette opération, un signe distinctif peut être apposé sur certains blocs de construction 1 lors de leur fabrication, faisant par exemple référence au fait que ces blocs de construction 1 sont conçus pour être recyclables, et à quel endroit peut-on acheminer les blocs de construction 1 usagés pour qu'ils soient utilisés dans la fabrication de nouveaux blocs de construction 1.

L'enveloppe 3 est réalisée dans un béton dont la matière sèche comporte au moins 90 %, de préférence au moins 95 %, en poids de matière minérale . Par exemple, cette matière sèche est un mélange à au moins 90%, de préférence au moins 95%, de ciment et de sable, le sable étant par exemple de granulométrie inférieure à 16 mm et étant soit un sable issu de carrière, soit un sable recyclé. Elle peut toutefois être réalisée dans tout matériau de construction présentant les propriétés mécaniques requises pour conférer au bloc de construction, quelle que soit la nature des particules 4 du noyau 2, une résistance mécanique suffisante pour l'utilisation qui sera faite du bloc de construction 1. Ce critère peut donc varier selon l'utilisation qui est faite du bloc de construction 1.

Le noyau 2 comporte également de préférence un liant 5. Le liant 5 comprend de préférence un liant minéral, tel qu'un ciment. Le liant 5 peut encore comprendre de la chaux, qui présente l'avantage de neutraliser les éventuelles matières organiques présentes dans les particules 4 du noyau 2. Le liant 5 peut être nécessaire pour obtenir un bloc de construction 1 présentant les propriétés mécaniques voulues. Toutefois, dans certains cas, le noyau 2 peut être composé uniquement de particules 4, éventuellement d'additifs, mais sans liant 5, ce qui présente l'avantage d'augmenter la teneur en particules 4 dans le bloc de construction 1.

Le noyau 2 peut encore comprendre des charges, par exemples minérales, ou biosourcées, autres que les particules 4.

L'enveloppe 3, peut comprendre des additifs, afin de conférer à cet élément certaines propriétés. L'enveloppe 3 peut ainsi comporter un adjuvant accélérateur de prise, qui est particulièrement utile lorsque le noyau comporte des particules présentant un certain taux d'humidité, pour accélérer le séchage des blocs de construction 1 lors de leur fabrication. L'enveloppe 3 peut encore comporter un adjuvant entraineur d'air, ce qui permet d'augmenter sa résistance aux cycles de gel/dégel et aux intempéries, ce qui est particulièrement intéressant en présence de particules issues d'un mélange de matériaux dont la composition exacte peut varier d'un bloc de construction 1 à un autre.

L'enveloppe 3 peuvent encore comprendre des additifs de renforcement mécaniques, tels que des fibres structurelles, par exemple à base de matériaux textiles, ou encore une armature métallique.

L'enveloppe 3 peut également comprendre un additif hydrofuge, afin d'éviter les phénomènes physiques ou chimiques pouvant se présenter lors de la variation du taux d'humidité du noyau 2 et pouvant porter atteinte aux performances mécaniques du bloc de construction 1.

La teneur en volume des particules 4 dans le noyau 2 est de préférence supérieure à 50 %, par exemple comprise entre 50 et 80 %, ou encore entre 60 et 80 %. Dans certains cas, cette valeur peut être supérieure à 80 %, voire atteindre 100%, lorsque l'épaisseur et la solidité de l'enveloppe permettent d'utiliser un noyau 2 sans liant 5.

La teneur en volume de particules 4 du noyau 2 dans le bloc 1 complet, c'est-à-dire en prenant en compte l'enveloppe 3, est de préférence supérieure à 20%, par exemple comprise entre 40 et 80 %. En effet, il a été constaté que de telles teneurs, même avec des particules 4 issues de déchets de construction non triés, permettaient d'obtenir des blocs 1 utilisables pour la construction.

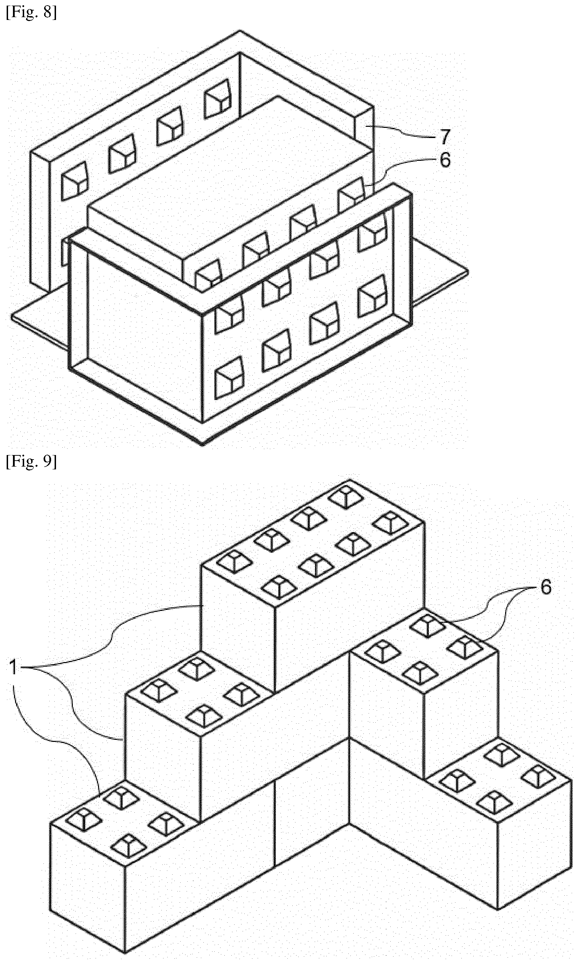

Le bloc de construction 1 peut être un bloc empilable, ce qui permet d'élever des murs sans utiliser de mortier entre les blocs de construction 1. Pour ce faire, le bloc de construction 1 peut comporter sur une première de ses faces au moins un ergot 6, et sur une deuxième de ses faces opposée à la première face au moins un évidement configuré pour recevoir l'ergot 6 d'un autre bloc de construction 1. L'ergot 6 a par exemple la forme d'une pyramide tronquée à base carrée.. Dans un mode de réalisation préféré illustré en fig. 9, la première face comporte huit ergots 6 disposés en deux rangées de quatre.

Le bloc de construction 1 peut également être utilisé comme un parpaing de construction. Ses dimensions, et l'épaisseur ainsi que la formulation de l'enveloppe 3 seront dans ce cas adaptées.

Le bloc de construction 1 peut comporter au moins une ancre de levage, par exemple de type Arteon (marque déposée). Le moyen de fixation de l'ancre de levage est de préférence disposé au niveau de l'enveloppe 3, dont la résistance mécanique est plus importante que le noyau 2. Si bloc de construction 1 comporte des ergots 6, l'ancre de levage est disposée sur la même face que les ergots 6.

Les dimensions du bloc de construction 1 dépendent de l'utilisation pour laquelle il est conçu.

Le bloc de construction 1, particulièrement dans le mode de réalisation dans lequel il est empilable, présente par exemple une longueur de 150 cm, une largeur de 60 cm et une hauteur de 60 cm. L'épaisseur de l'enveloppe tout autour du noyau 2 est alors de préférence comprise entre 4 et 15 cm, par exemple 5 cm.

Dans d'autres modes de réalisation, par exemple pour une utilisation comme parpaing, l'épaisseur de l'enveloppe est par exemple comprise entre 10 et 25 mm.

Dans tous les cas, on cherche à utiliser une épaisseur minimale d'enveloppe 3 afin d'avoir une teneur maximale en particules 3 dans le bloc de construction 1, ce qui évite d'utiliser des matériaux dont l'extraction est chère et coûteuse pour l'environnement, et ce qui réduit les quantités de déchets à incinérer ou enfouir.

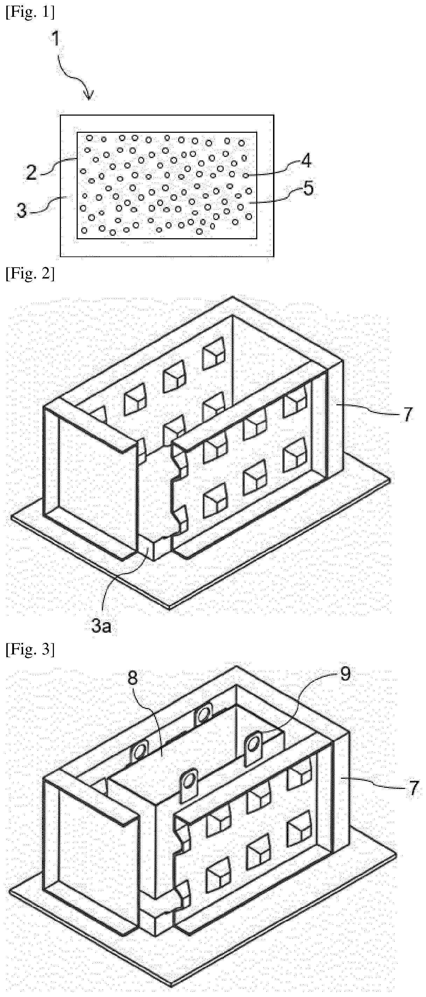

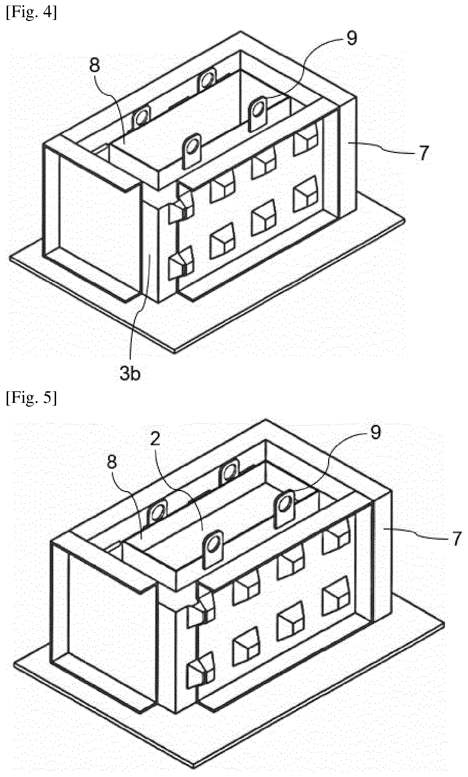

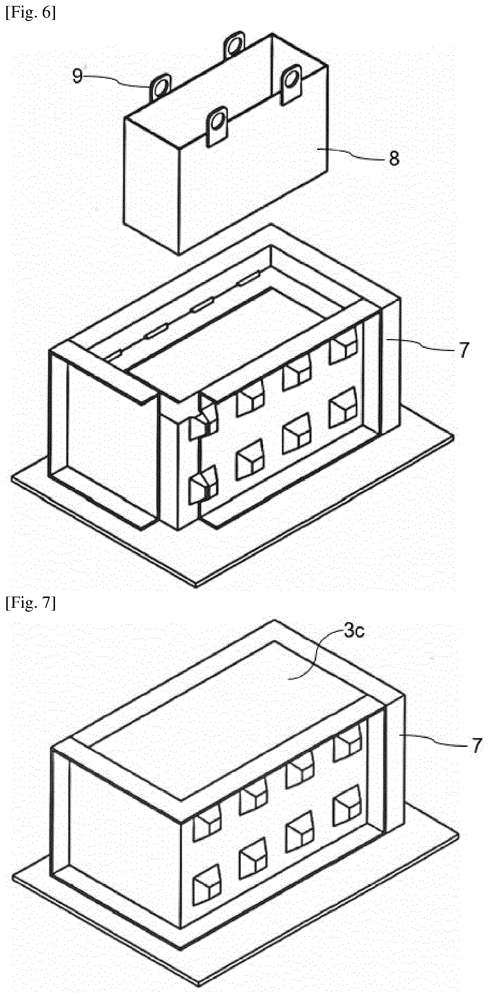

Le bloc de construction 1 peut être fabriqué selon un procédé comportant les étapes suivantes, illustrées aux figures 2 à 8 :
- coulage de la base 3a de l'enveloppe 3 au fond d'un moule 7. L'état du procédé suite à cette étape est illustré à la figure 2,
- mise en place d'au moins un séparateur 8 dans le moule 7. Le séparateur 8 comporte des éléments latéraux définissant un volume intérieur correspondant au volume du noyau 2. Lorsqu'il est en position dans le moule 7, le séparateur 8 est ouvert à ses extrémités inférieure et supérieure. Dans un mode de réalisation préféré dont un exemple est illustré aux figures 3 à 6, le séparateur 8 comporte quatre éléments latéraux constitués de plaques verticales, afin de former un parallélépipède rectangle ouvert sur ses faces inférieure et supérieure. D'autres formes qu'un parallélépipède rectangle peuvent être utilisées. De plus, d'autres configurations sont possibles, notamment un ou plusieurs séparateurs 8 peuvent être utilisés pour obtenir une pluralité de noyaux 2. Le séparateur 8 est suspendu dans le moule 7 par un moyen de suspension 9 situé au-dessus de ses éléments latéraux, de façon à ce que la partie inférieure de ses éléments latéraux affleure la première paroi de l'enveloppe 3. Le moyen de suspension 9 est par exemple constitué, comme illustré aux figures 3 à 6, d'une pluralité de boucles fixées au sommet des éléments latéraux du séparateur 8. Cette suspension par le dessus permet notamment de couler le noyau 2 et l'enveloppe 3 avec le séparateur 8 en place dans le moule 7, puis de retirer le séparateur 8 avant séchage sans modifier les positions relatives du noyau 2 et de l'enveloppe 3 dans le moule 7. L'état du procédé suite à cette étape est illustré à la figure 3,
- coulage des parois latérales 3b de l'enveloppe 3 autour des éléments latéraux du séparateur 8. Cette étape est de préférence réalisée avant le séchage de la base 3a de l'enveloppe 3, afin que la partie inférieure des parois latérales 3b de l'enveloppe 3 et la partie supérieure de la base 3a de l'enveloppe 3 sèchent l'une contre l'autre, ce qui permet d'obtenir ainsi une forte adhérence entre ces parties, renforçant la résistance mécanique du bloc 1. L'état du procédé suite à cette étape est illustré à la figure 4,
- coulage du noyau 2 à l'intérieur du séparateur 8, le noyau étant maintenu en place par la base 3a de l'enveloppe 3 et les éléments latéraux du séparateur. Cette étape est de préférence réalisée avant le séchage de la base 3a de l'enveloppe 3, afin que la partie inférieure du noyau 2 et la partie supérieure de la base 3a de l'enveloppe 3 sèchent l'une contre l'autre, ce qui permet d'obtenir ainsi une forte adhérence entre ces parties, renforçant la résistance mécanique du bloc 1. Cette étape peut être réalisée avant ou après l'étape décrite ci-dessus de coulage des parois latérales 3b de l'enveloppe 3. L'état du procédé suite à cette étape est illustré à la figure 5,
- retrait du séparateur 8 du moule 1, par un mouvement de translation vers le haut, afin de mettre en contact le noyau 2 avec les parois latérales de l'enveloppe 3. Le moyen de suspension 9 peut être alors utilisé comme moyen de levage du séparateur 8. Cette étape est de préférence réalisée avant le séchage du noyau 2 et avant le séchage des parois latérales de l'enveloppe 3, afin que la partie intérieure des parois latérales de l'enveloppe 3 et la partie extérieure du noyau 2 sèchent l'une contre l'autre, ce qui permet d'obtenir ainsi une forte adhérence entre ces parties, renforçant la résistance mécanique du bloc 1. L'état du procédé suite à cette étape est illustré à la figure 6,
- éventuellement coulage du sommet 3c de l'enveloppe 3, afin de recouvrir le noyau. Cette étape est optionnelle. Cette étape est de préférence réalisée avant le séchage du noyau 2 et avant le séchage des parois latérales de l'enveloppe 3, afin que la partie supérieure des parois latérales de l'enveloppe 3 et la partie supérieure du noyau 2 sèchent l'une contre l'autre, ce qui permet d'obtenir ainsi une forte adhérence entre ces parties, renforçant la résistance mécanique du bloc 1. L'état du procédé suite à cette étape est illustré à la figure 7.

Il est à noter que les termes ci-dessus de « base », « parois latérales » et « sommet », relatifs à l'enveloppe 3, désignent des parties de l'enveloppe 3 par leur position durant le procédé de fabrication. En effet, le bloc de construction 1 peut être fabriqué sur une de ses parois latérales, comme illustré aux figures 2 à 8. Dans ce cas, lors de l'utilisation du bloc de construction 1, le bloc de construction 1 est tourné de 90° selon un axe horizontal par rapport à sa fabrication. Ainsi les éléments qui étaient, lors de la fabrication, la base et le sommet de l'enveloppe 3 deviennent, lors de l'utilisation du bloc de construction 1, des parois latérales, et les parois latérales deviennent pour deux d'entre elles la base et le sommet de l'enveloppe 3.

A l'issue de ces étapes, et lorsque le noyau 2 et/ou l'enveloppe 3 sont suffisamment secs, le moule 7 peut être retiré. Le moule 7 peut être un moule monobloc, ou un moule fait de plusieurs pièces. Dans l'exemple illustré aux figures 2 à 8, le moule 7 comporte deux pièces. Ce mode de réalisation est le plus simple à mettre en œuvre lorsque le bloc de construction comporte des ergots 6 et des évidements correspondants. En effet il permet de fabriquer le bloc de construction sur un de ses côtés, et de démouler ensuite séparément la face comportant les ergots 6 et la face comportant les évidements.

Après retrait du moule, le bloc de construction subit une étape de séchage. Ce séchage peut se faire à l'air libre, ou par tout moyen connu de l'homme du métier. Lorsqu'il est réalisé à l'air libre, la durée du séchage est par exemple comprise entre entre 3 et 7 jours, et dans certains cas jusqu'à 21 jours.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Bloc de construction (1) comportant au moins un noyau (2) et une enveloppe (3), ledit au moins noyau (2) étant disposé à l'intérieur de ladite enveloppe (3), **caractérisé en ce que** ledit au moins un noyau (2) comporte des particules (4) de bois et/ou de plastique et/ou de plâtre et/ou de verre et/ou de cailloux et/ou de brique et/ou de béton et/ou de laine de verre et/ou de laine de roche et/ou de carton souillé et/ou de polystyrène et/ou de mâchefer et/ou de caoutchouc,, et **en ce que** ladite enveloppe (3) est réalisée dans un béton comportant au moins 90% en poids de matière minérale.

2. Bloc de construction (1) selon la revendication 1, **caractérisé en ce que** le noyau (2) comporte un liant (5) , et la teneur en volume de particules (4) dans le noyau (2) est comprise entre 50 et 80 %.

3. Bloc de construction selon l'une des revendications 1 à 2, **caractérisé en ce que** la teneur en volume des particules (4) du noyau (2) dans le bloc de construction (1) est comprise entre 40 et 80 %.

4. Bloc de construction (1) selon l'une des revendications 1 à 3, **caractérisé en ce que** le noyau (2) comporte des particules (4) d'au moins deux éléments différents parmi le bois, le plastique, le plâtre, le verre, le caillou, la brique, le béton, la laine de verre, la laine de roche, le carton souillé, le polystyrène, le mâchefer et le caoutchouc.

5. Bloc de construction (1) selon l'une des revendications 1 à 4, **caractérisé en ce que** le noyau (2) comporte des particules d'au moins cinq éléments différents parmi le bois, le plastique, le plâtre, le verre, le caillou, la brique, le béton, la laine de verre, la laine de roche, le carton souillé, le polystyrène, le mâchefer et le caoutchouc.

6. Bloc de construction (1) selon l'une des revendications 1 à 5, **caractérisé en ce que** la granulométrie des particules (4) est comprise entre 0 et 100 mm.

7. Bloc de construction (1) selon l'une des revendications 1 à 6, comportant une première face comprenant au moins un ergot (6), et une deuxième face opposée à la première face comprenant au moins un évidement configuré pour recevoir un ergot (6) d'un autre bloc de construction, afin de rendre ledit bloc de construction (1) empilable.

8. Procédé de fabrication d'un bloc de construction (1) selon l'une des revendications 1 à 7, comportant les étapes suivantes :
- collecte de déchets constitués au moins en partie de bois et/ou de plastique et/ou de plâtre et/ou de verre et/ou de cailloux et/ou de brique et/ou de béton et/ou de laine de verre et/ou de laine de roche et/ou de carton souillé et/ou de polystyrène et/ou de mâchefer et/ou de caoutchouc sur un chantier de construction et/ou un incinérateur et/ou un point de collecte de pneus usagés et/ou un centre de tri,
- broyage des déchets afin d'obtenir lesdites particules (4).

9. Procédé de fabrication d'un bloc de construction (1) selon la revendication 8, dans lequel les déchets collectés comprennent au moins un bloc de construction (1) selon l'une des revendications 1 à 7 usagé.

10. Procédé de fabrication et d'utilisation d'un bloc de construction (1) selon l'une des revendication 1 à 7, comportant en outre les étapes suivantes :
- fabrication d'un bloc de construction (1) selon l'une des revendications 8 à 9, la collecte des déchets ayant lieu au moins partiellement sur un chantier de construction, et la fabrication ayant lieu sur ledit chantier de construction,
- utilisation du bloc de construction (1) pour réaliser un mur sur ledit chantier de construction.

11. Procédé de fabrication d'un bloc de construction (1) selon l'une des revendications 1 à 7, comportant les étapes suivantes :
- coulage de la base (3a) de l'enveloppe (3) au fond d'un moule (7),
- mise en place d'au moins un séparateur (8) dans le moule (7), le séparateur (8) comportant des éléments latéraux définissant un volume intérieur correspondant au volume du noyau (2), le séparateur (8) étant ouvert à ses extrémités inférieure et supérieure, le séparateur (8) comportant un moyen de suspension (9) situé au-dessus de ses éléments latéraux et étant suspendu dans le moule (7) par ledit moyen de suspension (9), de façon à ce que la partie inférieure de ses éléments latéraux affleure le haut de la base (3a) de l'enveloppe (3),
- avant que la base (3a) de l'enveloppe (3) ne soit sèche, coulage des parois latérales de l'enveloppe(3) autour des éléments latéraux du séparateur (8),
- avant que la base (3a) de l'enveloppe (3) ne soit sèche, coulage du noyau (2) à l'intérieur du séparateur (8), le noyau (2) étant maintenu en place par la base (3a) de l'enveloppe (3) et les éléments latéraux du séparateur (8),
- retrait du séparateur (8) du moule (7), afin de mettre en contact le noyau (2) avec les parois latérales de l'enveloppe (3).

12. Procédé de fabrication d'un bloc de construction selon l'une des revendications 8 à 10 et la revendication 11.
